# FASCICULE DE BREVET EUROPEEN

(11) **EP 0 988 527 B1**
(45) Date de publication et mention de la délivrance du brevet: **27.08.2003**
(21) Numéro de dépôt: 98922566.9
(22) Date de dépôt: 08.06.1998
(51) Int. Cl.: G01N 21/76, G01N 27/28

(54) **DETECTEUR ELECTROCHIMIOLUMINESCENT**
ELEKTROCHEMILUMINESZENZDETEKTOR
ELECTROCHEMOLUMINESCENT DETECTOR

(30) Priorité: 09.06.1997 FR 9707269
(43) Date de publication de la demande: 29.03.2000
(73) Titulaire: C.S.E.M. CENTRE SUISSE D'ELECTRONIQUE ET DE MICROTECHNIQUE SA, 2007 Neuchâtel (CH)
(72) Inventeur: DE ROOIJ, Nico, CH-2014 Bôle (CH); KOUDELKA-HEP, Milena, CH-2000 Neuchâtel (CH); FIACCABRINO, Giovanni, C., CH-1425 Onnens (CH)
(74) Mandataire: Gresset, Jean
(86) Numéro de dépôt international: CH9800246
(87) Numéro de publication internationale: WO98057154

(56) Documents cités:
- WO-A-89/10552
- SMITH ET AL: "ELECTROCHEMILUMINESCENCE AT MICROELECTRODES FOR BIOSENSING" PROCEEDINGS OF THE SPIE: CONFERENCE ON MICRO- AND NANOFABRICATED ELECTRO-OPTICAL MECHANICAL SYSTEMS FOR BIOMEDICAL AND ENVIRONMENTAL APPLICATIONS, SAN JOSE, CA, USA, 10-11 FEBRUARY 1997, vol. 2978, 1997, pages 64-68, XP002056761 & DATABASE INSPEC Inspec No. 5769345,
- HSUEH Y -T ET AL: "A MICROFABRICATED, ELECTROCHEMILUMINESCENCE CELL FOR THE DETECTION OF AMPLIFIED DNA" SENSORS AND ACTUATORS B, vol. B33, no. 1/03, juillet 1996, pages 110-114, XP000632930
- FIACCABRINO ET AL: "ON CHIP DETECTION OF ELECTROGENERATED CHEMILUMINESCENCE OF RU(BPY) AT PT INTERDIGITATED MICROELECTRODE ARRAYS" PROCEEDINGS OF THE 1997 INTERNATIONAL CONFERENCE ON SOLID-STATE SENSORS AND ACTUATORS, PART 1, CHICAGO, IL, USA, 16-19 JUNE 1997, 1997, pages 171-174, XP002073808

## Description

La présente invention se rapporte aux systèmes électrochimioluminescents. Elle concerne, plus particulièrement, un détecteur et un procédé pour le dosage de substances par la génération et la détection de chimioluminescence electrogénérée (ECL) ou électrochimioluminescence.

La chimioluminescence est utilisée pour le dosage de substances biochimiques et biologiques. Elle permet notamment la mesure de traces de micro-organismes, d'hormones, de virus, d'anticorps, d'amines ou de protéines.

Le dosage par chimioluminescence consiste à marquer la substance recherchée au moyen d'un agent chimioluminescent dont la détection et le dosage sont réalisés par la mesure de la lumière émise lorsqu'après avoir été placé dans un état excité, il revient à son état initial.

L'état excité permettant l'émission de lumière est le produit d'une réaction chimique entre deux substances particulières. La présente invention concerne, plus particulièrement, les systèmes utilisant une réaction électrochimique, appelés systèmes électrochimioluminescents, dans lesquels l'un au moins des réactifs est produit électrochimiquement à partir d'une substance initialement présente dans la solution.

Les systèmes électrochimioluminescents connus comportent généralement une cellule pour la génération et la détection de chimioluminescence électrogénérée, qui comprend au moins une électrode de travail, des moyens d'alimentation de l'électrode en énergie électrique, une photodiode pour détecter la lumière générée et des moyens de mesure du signal délivré par la photodiode.

Ces systèmes utilisent une seule ou deux électrodes de travail, comme cela sera décrit plus loin. Dans les deux cas, afin de réaliser des mesures fiables, la photodiode doit être placé aussi près que possible de l'endroit où la réaction d'électrochimioluminescence se produit. Il faut, de plus, que toute la lumière parasite soit prise en compte afin d'éliminer au mieux des erreurs systématiques.

De telles conditions sont relativement difficiles à respecter lorsqu'il s'agit de réaliser des systèmes miniaturisés, d'utilisation facile et peu coûteux.

Pour répondre à ces exigences, la publication de Smith et Al. « Electrochemiluminescence at microelectrodes for biosensing » (SPIE vol. 2978, 1977, pages 64-68, XP-002056761) décrit une cellule électrochimioluminescente miniaturisée dont les différents constituants sont assemblés pour former une structure très compacte.

La présente invention a pour objet de faire un pas supplémentaire dans la réalisation de détecteurs électrochimioluminescents de très petites dimensions, simples et pratiques à utiliser, de faible prix et permettant de larges domaines d'applications.

De façon plus précise, l'invention concerne un détecteur électrochimioluminescent pour le dosage d'une substance biochimique ou biologique, du type comportant au moins une cellule pour la génération et la détection de chimioluminescence électrogénérée, qui comprend :
- au moins une électrode de travail réalisée sur un substrat,
- des moyens d'alimentation en énergie électrique, reliés à ladite électrode,
- une photodiode pour détecter la lumière générée par électrochimioluminescence, et
- des moyens de mesure du signal délivré par la photodiode.

Selon la présente invention, un tel détecteur est principalement caractérisé en ce que la photodiode est réalisée par intégration dans le substrat de l'électrode de travail.

Avantageusement, la cellule comporte deux électrodes de travail interdigitées qui sont utilisées l'une en anode et l'autre en cathode. La cathode est réalisée en carbone et l'anode en un matériau choisi parmi le platine, l'or, le carbone et les oxydes métalliques transparents. La distance entre la cathode et l'anode est inférieure à 10 microns.

Selon une forme de réalisation préférée, la cellule comporte une couche de passivation dans laquelle les électrodes sont intégrées, tout en laissant une partie de leur face supérieure en contact avec l'extérieur, ainsi qu'une couche intermédiaire réalisée en un matériau diélectrique, disposée entre l'électrode et le substrat.

De préférence, le détecteur selon l'invention comporte deux cellules de mesure identiques, telles que décrites ci-dessus, dont les électrodes respectives sont réalisées sur le même substrat et dont les photodiodes respectives sont réalisées par intégration dans ledit substrat. L'électrode de l'une seulement des cellules est reliée aux moyens d'alimentation, et les moyens de mesure comportent des moyens pour déterminer la différence entre les signaux délivrés par les photodiodes des deux cellules. Dans cette réalisation, la couche de passivation et la couche intermédiaire sont communes aux deux cellules.

Le but de l'invention est également atteint par un procédé selon lequel la substance à doser est en solution aqueuse. Dans ce cas, la cathode est réalisée en carbone, tandis que l'anode est réalisée en un matériau choisi parmi le platine, l'or, le carbone et autres matériaux connus de l'homme de l'art, notamment les oxydes métalliques transparents, la distance entre cathode et anode étant inférieure à 10 microns.

La présente invention et ses avantages seront mieux compris en référence à la description de différents modes de réalisation et aux dessins annexés dans lesquels :
- la figure 1 illustre de façon schématique une réaction d'électrochimioluminescence se produisant sur une cellule à deux électrodes de travail,
- la figure 2 illustre une réaction d'électrochimioluminescence se produisant sur une cellule à une seule électrode de travail,
- la figure 3 est une vue schématique d'ensemble du détecteur selon la présente invention, et
- la figure 4 est une vue en perspective d'une partie du détecteur de la figure 3.

Comme le montrent ces figures, le détecteur électrochimioluminescent 10 selon la présente invention comporte essentiellement deux cellules de mesure identiques 11 et 12, dont les mêmes constituants sont désignés par les mêmes numéros de référence.

Chaque cellule comporte deux électrodes de travail, une anode 16 et une cathode 17, qui sont séparées d'une distance inférieure à 10 microns, des moyens 13 d'alimentation électrique des électrodes de la cellule 11 uniquement, un détecteur photoélectrique 14 pour détecter la lumière générée par électrochimioluminescence et des moyens de mesure 15 du signal de sortie du détecteur 14.

La cellule 11 est la cellule dite active, tandis que la cellule 12 est la cellule dite de référence destinée à la mesure du bruit de fond, raison pour laquelle elle n'est pas alimentée en énergie électrique.

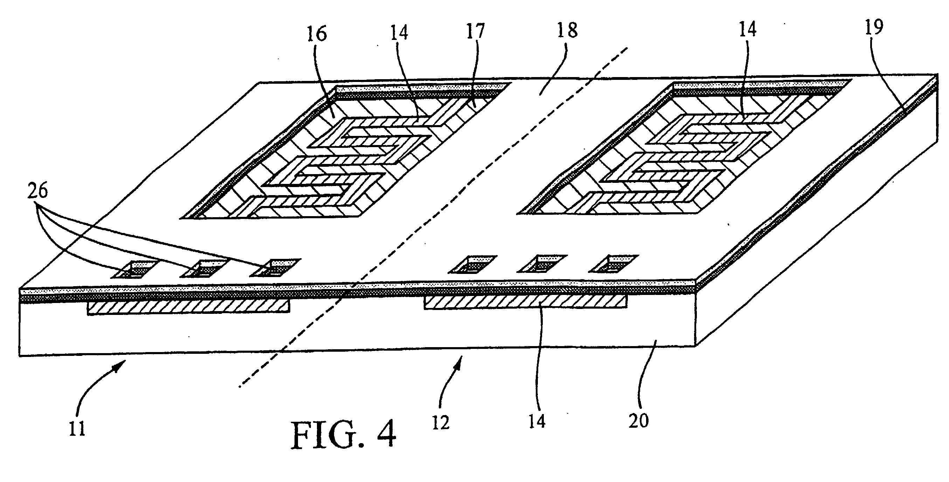

Comme cela apparaît sur la figure 4, l'anode 16 et la cathode 17 sont interdigitées. Elles sont séparées d'une distance inférieure à 10 microns. De façon avantageuse, bien que cela ne soit pas indispensable, ces deux électrodes sont protégées par une couche de passivation 18 laissant une partie de leur face supérieure en contact avec l'extérieur. Le tout est déposé sur une couche intermédiaire 19, elle-même réalisée sur un substrat de silicium 20, de type n.

Il est avantageux que les électrodes 16 et 17 soient interdigitées, mais d'autres dispositions et géométries sont possibles pour autant que la distance les séparant soit inférieure à 10 microns.

La couche de passivation 18, la couche intermédiaire 19 et le substrat 20 sont communs aux deux cellules.

Le détecteur photoélectrique 14 est constitué d'une photodiode formée d'une zone diffusée de type n dans le substrat 20 de type p, sous les électrodes interdigitées 16 et 17.

En d'autres termes, la photodiode 14 est réalisée par intégration dans le substrat 20 sur lequel sont déposées les électrodes de travail interdigitées 16 et 17.

La couche intermédiaire 19 est formée d'une matière diélectrique et assure une isolation galvanique entre les électrodes 16 et 17 et la photodiode 14. Cette couche sert également à assurer une protection des cellules contre une attaque chimique par le milieu ambiant. Ceci permet de minimiser les risques de détérioration des cellules.

Une autre fonction de la couche intermédiaire 19 est de réduire la réflexion lumineuse à l'interface avec le substrat 20. Ceci se fait en ajustant l'épaisseur et l'indice de réfraction de la couche en fonction de la longueur d'onde de la lumière émise, qui dépend du produit utilisé comme marqueur.

Dans une utilisation concrète du détecteur selon l'invention, le marqueur est du ruthénium (II) tris (2,2' - bipyridyl). D'autres produits, tels que du luminol, peuvent également être employés.

La couche intermédiaire 19 est réalisée en nitrure de silicium Si₃N₄ et a une épaisseur d'environ 0,4 micron, de manière à minimiser les réflexions à 610 nm correspondant à la longueur d'onde d'émission maximale du ruthénium lorsque celui-ci est utilisé comme marqueur. Cette couche est avantageusement déposée par un procédé de dépôt connu sous le nom de "Plasma enhanced chemical vapor deposition" et sous l'abréviation PECVD.

Selon un mode de réalisation avantageux, les électrodes 16 et 17 sont réalisées en platine, en or, en carbone ou en oxydes métalliques transparents connus de l'homme de métier. Dans ce cas, elles peuvent être utilisées pour mesurer des substances contenues dans des solutions organiques. Elles peuvent également être utilisées dans des détecteurs à une seule électrode de travail, c'est-à-dire dans lesquels les deux électrodes interdigitées sont électriquement connectées entre elles.

Selon un autre mode de réalisation, la cathode 17 peut être réalisée en carbone, l'anode 16 pouvant indifféremment être formée de platine, d'or, de carbone ou d'oxydes métalliques transparents. Dans ce cas, lorsque les deux électrodes sont suffisamment proches, à savoir à une distance inférieure à 10 microns, il est possible de réaliser un dosage de composants en solution exclusivement aqueuse ou également en solution organique.

La couche de passivation supérieure 18 permet d'isoler les cellules du milieu ambiant, afin de minimiser les risques de détérioration dus aux attaques chimiques de ce milieu. Cette couche 18 peut être réalisée en une matière telle que du nitrure de silicium Si₃N₄. Son épaisseur est d'environ 0,4 micron et peut également être déposée par le procédé "PECVD" mentionné ci-dessus.

Les moyens d'alimentation 13 de la cellule active 11 comportent une source d'énergie électrique 21 et des pistes conductrices 22 réalisées sur un support, tel qu'une carte de circuit imprimé, à l'extrémité duquel sont disposées les deux cellules. Ces pistes conductrices 22 connectent les électrodes 16 et 17 de la cellule active 11 à la source 21. A titre d'exemple, la source délivre une tension alternative triangulaire, à la vitesse de 100 mV/sec, variant de -1,45 V à 1,65 V à la cathode, et une tension continue de 1,65 V à l'anode.

Les moyens de mesure 15 comportent essentiellement deux pistes conductrices 23 réalisées sur le support des deux cellules et connectent les deux photodiodes 14 à deux amplificateurs 24. Ces amplificateurs reçoivent le photocourant généré par les photodiodes et délivrent un signal amplifié à un appareil de mesure 25. Celui-ci détermine ensuite un signal représentatif de la différence entre le signal fourni par le photodétecteur de la cellule active 11 et celui fourni par le photodétecteur de la cellule de référence 12.

Selon une forme de réalisation avantageuse, les liaisons électriques 22 entre les électrodes 16 et 17 de la cellule active 11 et la source d'alimentation 21, et les liaisons électriques 23 entre les deux photodiodes 14 et les amplificateurs 24 se font par l'intermédiaire de zones de liaison 26 réalisées à une extrémité des cellules.

Le fonctionnement du détecteur de la présente invention va être maintenant décrit dans le cas, pris à titre d'exemple, où l'on cherche à doser un composé biochimique, tel qu'une protéine. Du ruthénium est alors utilisé comme marqueur. Son dosage donne le dosage du composé biochimique. Dans ce cas, deux méthodes de mesure sont possibles.

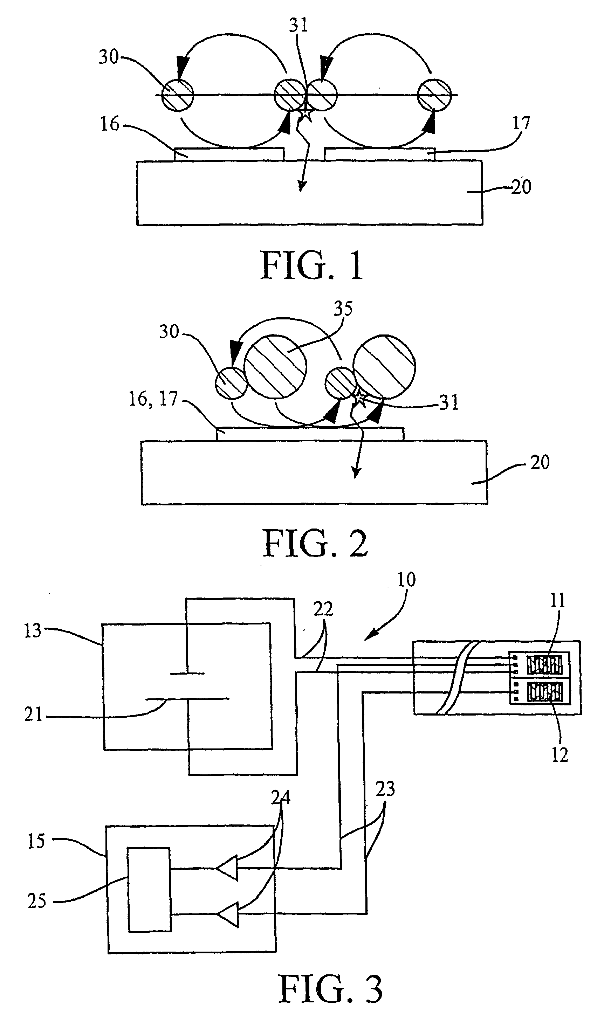

Selon la première méthode de l'invention, les deux électrodes de travail interdigitées sont utilisées respectivement comme anode et cathode. Plus précisément, on introduit dans un récipient la protéine à doser marquée par du ruthénium (II) tris (2, 2'-bipyridyl), Ru(bpy) ₃ ²⁺, en solution aqueuse. Les deux cellules 11 et 12 sont alors placées dans le récipient. Dans la cellule active 11, le Ru(bpy)₃ ²⁺ se réduit à la cathode 17 en Ru(bpy)₃⁺ et s'oxyde en Ru (bpy)₃ ³⁺ à l'anode 16. A la suite d'une réaction d'annihilation entre le Ru(bpy)₃⁺ et le Ru(bpy)₃ ³⁺, des photons sont libérés et détectés par la photodiode 14 de la cellule active 11. Cette réaction est illustrée en particulier par la figure 1.

Le photocourant généré par la libération des photons est amplifié par l'amplificateur 24 puis envoyé à l'appareil de mesure 25.

Simultanément, un photocourant parasite est généré au niveau des deux photodiodes 14. Il est dû à la lumière provenant de l'environnement mais aussi au bruit de fond des cellules elles-mêmes. Cet effet varie en fonction de la température, ce qui implique qu'il est difficile d'en tenir compte par calcul.

Le courant parasite affectant la mesure de la cellule active 11 est déterminé seul au moyen de la photodiode 14 de la cellule de référence 12 qui n'est pas alimentée. Bien entendu, ceci est valable pour autant que les deux cellules soient soumises aux mêmes conditions et qu'elles aient été réalisées de la même façon.

Ainsi, en déterminant, dans l'appareil de mesure 25, une différence entre les signaux de chacune des deux cellules, on obtient une valeur correspondant au courant généré uniquement par électrochimioluminescence. La mesure est indépendante de la lumière parasite et des variations de température. Il est donc possible de réaliser des mesures en lumière ambiante, ainsi que dans des conditions dans lesquelles la température varie.

Selon la deuxième méthode de l'invention, les deux électrodes interdigitées sont utilisées comme électrode de travail unique. Concrètement, les cellules sont alors les mêmes que les cellules à deux électrodes, avec la seule différence que celles-ci sont simplement connectées entre elles, soit à l'intérieur des cellules soit à l'extérieur, par exemple au niveau des pistes conductrices.

Dans ce cas, la solution aqueuse contenant la protéine marquée au ruthénium diffère de celle de la première méthode en ce qu'un co-réactif, tel qu'une amine, est utilisé. On induit alors une réaction d'oxydation de l'amine et du ruthénium en alimentant l'anode. La réaction chimique entre l'amine oxydée et le Ru(bpy)₃ ³⁺ engendre l'état excité du ruthénium qui produit la lumière détectée par la photodiode 14. Cette réaction est illustrée en particulier par la figure 2.

La mesure du courant délivré par la photodiode 14 donne une mesure du nombre de photons émis et, par conséquent, une mesure de la quantité du marqueur, donc de la substance à doser.

Le détecteur selon l'invention, qui vient d'être décrit, permet ainsi de réaliser, de façon simple, des mesures avec des cellules à une ou à deux électrodes, selon la méthode choisie.

Un avantage particulièrement important de ce détecteur réside dans le fait qu'il intègre, dans une même cellule, les électrodes 16 et 17 et la photodiode 14. Ceci rend ce dispositif particulièrement fiable et facile à utiliser.

La présence d'une cellule subsidiaire permet d'éliminer facilement l'influence de la lumière parasite et de la variation de température, ce qui permet de simplifier les conditions de mesure et d'améliorer de façon importante la fiabilité des mesures.

Dans la première méthode décrite, la proximité de l'anode et de la cathode et l'utilisation d'une cathode en carbone permettent de réaliser des mesures en solution aqueuse exclusivement, ce qui n'est pas possible avec les dispositifs connus actuellement.

Enfin, il est à noter que lorsque la photodiode 14 est polarisée dans le sens bloqué, on mesure la quantité de lumière, alors que si elle est polarisée dans le sens passant, on mesure la température, ce qui peut se révéler intéressant dans certaines applications.

La présente invention n'est pas limitée aux modes de réalisations décrits. En particulier, les matériaux utilisés pour les différentes couches et, tout particulièrement la couche intermédiaire 19 et la couche de passivation 18, doivent être adaptés aux substances à analyser.

De même, l'épaisseur de la couche intermédiaire 19 doit être adaptée à la substance à analyser.

Le dispositif selon la présente invention peut être utilisé pour réaliser des mesures ponctuelles dans un récipient, ou pour des mesures continues dans lesquelles un flux de substance à analyser se déplace par rapport à la cellule. Ceci permet d'avoir une mesure de l'évolution de la quantité de substance à mesurer, tout en éliminant l'influence de variations de température et de modification de la lumière parasite.

## Revendications

1. Détecteur électrochimioluminescent pour le dosage d'une substance biochimique ou biologique, comportant au moins une cellule (11,12) pour la génération et la détection de chimioluminescence électrogénérée, qui comprend :
- au moins une électrode de travail (16,17) réalisée sur un substrat (20),
- des moyens d'alimentation (13) en énergie électrique, reliés à ladite électrode,
- une photodiode (14) pour détecter la lumière générée par électrochimioluminescence,
- et des moyens de mesure (15) du signal délivré par la photodiode,
**caractérisé en ce que** ladite photodiode (14) est réalisée par intégration dans ledit substrat (20).

2. Détecteur selon la revendication 1, **caractérisé en ce que** la cellule comporte deux électrodes de travail, une anode (16) et une cathode (17).

3. Détecteur selon la revendication 2, **caractérisé en ce que** les deux électrodes de travail (16, 17) sont interdigitées.

4. Détecteur selon l'une des revendications 2 et 3, **caractérisé en ce que** la cathode (17) est réalisée en carbone, **en ce que** l'anode (16) est réalisée en
un matériau choisi parmi le platine, l'or, le carbone et les oxydes métalliques transparents, et **en ce que** la distance entre la cathode et l'anode est inférieure à 10 microns.

5. Détecteur selon l'une des revendications 1 à 4, **caractérisé en ce que** la cellule comporte une couche de passivation (18) dans laquelle lesdites électrodes sont intégrées, tout en laissant une partie de leur face supérieure en contact avec l'extérieur.

6. Détecteur selon l'une des revendications 1 à 5 , **caractérisé en ce que** la cellule comporte une couche intermédiaire (19) réalisée en un matériau diélectrique, disposée entre l'électrode (16,17) et le substrat (20).

7. Détecteur selon la revendication 6, **caractérisé en ce que** ladite couche intermédiaire (19) comporte du nitrure de silicium.

8. Détecteur selon l'une des revendications 1 à 7, **caractérisé en ce qu'**il comporte deux cellules de mesure identiques (11, 12) dont les électrodes (16, 17) respectives sont réalisées sur le même substrat (20) et dont les photodiodes (14) respectives sont réalisées par intégration dans ledit substrat, **en ce que** l'électrode de l'une seulement des cellules (11) est reliée aux moyens d'alimentation (13), et **en ce que** lesdits moyens de mesure (15) comportent des moyens (25) pour déterminer la différence entre les signaux délivrés par les photodiodes (14) des deux cellules.

9. Détecteur selon la revendication 8, **caractérisé en ce que** la couche de passivation (18) et la couche intermédiaire (19) sont communes aux deux cellules.

10. Procédé de dosage d'une substance biochimique ou biologique au moyen du détecteur selon la revendication 4, **caractérisé en ce que** ladite substance est en solution aqueuse.

## Patentansprüche

1. Elektrolumineszenzdetektor für die Dosierung einer biochemischen oder biologischen Substanz, umfassend mindestens eine Zelle (11, 12) zur Erzeugung und Erfassung einer elektrisch erzeugten Chemolumineszenz, umfassend:
- mindestens eine Arbeitselektrode (16, 17), die auf einem Substrat (20) verwirklicht ist,
- elektrische Versorgungsmittel (13), die mit der Elektrode verbunden sind,
- eine Photodiode (14) zur Erfassung des von der Elektrochemolumineszenz erzeugten Lichts,
- und Mittel (15) zum Messen des von der Photodiode gelieferten Signals,
**dadurch gekennzeichnet, dass** die Photodiode (14) durch Integration in das Substrat (20) verwirklicht ist.

2. Detektor nach Anspruch 1, **dadurch gekennzeichnet, dass** die Zelle zwei Arbeitselektroden, eine Anode (16) und eine Kathode (17), umfasst.

3. Detektor nach Anspruch 2, **dadurch gekennzeichnet, dass** die beiden Arbeitselektroden (16, 17) parallel geschaltet sind.

4. Detektor nach einem der Ansprüche 2 und 3, **dadurch gekennzeichnet, dass** die Kathode (17) aus Kohlenstoff hergestellt ist, dass die Anode (16) aus einem Material, das unter Platin, Gold, Kohlenstoff und den transparenten Metalloxiden ausgewählt wird, hergestellt ist und dass der Abstand zwischen der Kathode und der Anode geringer als 10 Mikrometer ist.

5. Detektor nach einem der Ansprüche 1 bis 4, **dadurch gekennzeichnet, dass** die Zelle eine Passivierungsschicht (18) umfasst, in die die Elektroden integriert sind, wobei ein Teil ihrer Oberseite mit außen in Kontakt bleibt.

6. Detektor nach einem der Ansprüche 1 bis 5, **dadurch gekennzeichnet, dass** die Zelle eine Zwischenschicht (19) umfasst, die aus einem dielektrischen Material hergestellt und zwischen der Elektrode (16, 17) und dem Substrat (20) angeordnet ist.

7. Detektor nach Anspruch 6, **dadurch gekennzeichnet, dass** die Zwischenschicht (19) Siliziumnitrid umfasst.

8. Detektor nach einem der Ansprüche 1 bis 7, **dadurch gekennzeichnet, dass** er zwei identische Messzellen (11, 12) umfasst, deren jeweilige Elektroden (16, 17) auf demselben Substrat (20) ausgeführt sind und deren jeweilige Photodioden (14) durch Integration in das Substrat ausgeführt sind, dass die Elektrode von nur einer der Zellen (11) mit Versorgungsmitteln (13) verbunden ist und dass die Messmittel (15) Mittel (25) umfassen, um den Unterschied zwischen den von den Photodioden (14) der beiden Zellen gelieferten Signale zu bestimmen.

9. Detektor nach Anspruch 8, **dadurch gekennzeichnet, dass** die Passivierungsschicht (18) und die Zwischenschicht (19) beiden Zellen gemein sind.

10. Verfahren zur Dosierung einer biochemischen oder biologischen Substanz mittels des Detektors nach Anspruch 4, **dadurch gekennzeichnet, dass** sich die Substanz in wässeriger Lösung befindet.

## Claims

1. Electrochemiluminescent detector for analyzing a biochemical or biological substance, including at least one cell (11, 12) for generating and detecting the electrogenerated chemiluminescence, which includes:
- at least one working electrode (16, 17) made on a substrate (20);
- electric power supply means (13) connected to said electrode;
- a photodiode (14) for detecting the light generated by electrochemiluminescence; and
- means (15) for measuring the signal provided by the photodiode, **characterized in that** said photodiode (14) is produced by being integrated in said substrate (20).

2. Detector according to claim 1, **characterized in that** the cell includes two working electrodes, an anode (16) and a cathode (17).

3. Detector according to claim 2, **characterized in that** the two working electrodes (16, 17) are interdigitated.

4. Detector according to any of claims 2 and 3, **characterized in that** the cathode (17) is made of carbon, **in that** the anode (16) is made of a material selected from among platinum, gold, carbon and transparent metal oxides, and **in that** the distance between the cathode and the anode is less than 10 microns.

5. Detector according to any of claims 1 to 4, **characterized in that** the cell includes a passivation layer (18) in which said electrodes are integrated, while leaving a portion of their top surface in contact with the exterior.

6. Detector according to any of claims 1 to 5, **characterized in that** the cell includes an intermediate layer (19) made of a dielectric material, arranged between the electrode (16, 17) and the substrate (20).

7. Detector according to claim 6, **characterized in that** said intermediate layer (19) includes silicon nitride.

8. Detector according to any of claims 1 to 7, **characterized in that** it includes two identical measuring cells (11, 12) whose respective electrodes are made on the same substrate (20) and whose respective photodiodes (14) are made by being integrated in said substrate, **in that** the electrode of only one of the cells (11) is connected to the power supply means (13), and **in that** said measuring means (15) include means (25) for determining the difference between the signals provided by the photodiodes (14) of the two cells.

9. Detector according to claim 8, **characterized in that** the passivation layer (18) and the intermediate layer (19) are common to both cells.

10. Method for analyzing a biochemical or biological substance by means of the detector according to claim 4, **characterized in that** said substance is in an aqueous solution.
